# EUROPÄISCHE PATENTSCHRIFT

(11) **EP 3 743 733 B1**
(45) Veröffentlichungstag und Bekanntmachung des Hinweises auf die Patenterteilung: **06.10.2021**
(21) Anmeldenummer: 18830175.8
(22) Anmeldetag: 12.12.2018
(51) Int. Cl.: G01R 31/367, B60W 50/00, B60W 50/023, B60W 50/02, B60R 16/03

(54) **VERFAHREN ZUM ÜBERWACHEN DER ENERGIEVERSORGUNG EINES KRAFTFAHRZEUGS MIT AUTOMATISIERTER FAHRFUNKTION**
METHOD FOR MONITORING THE SUPPLY OF ENERGY TO A MOTOR VEHICLE WITH AN AUTOMATED DRIVING FUNCTION
PROCÉDÉ DE SURVEILLANCE DE L'ALIMENTATION EN ÉNERGIE D'UN VÉHICULE AUTOMOBILE MUNI D'UNE FONCTION DE CONDUITE AUTOMATISÉE

(30) Priorität: 24.01.2018 DE 102018201119
(43) Veröffentlichungstag der Anmeldung: 02.12.2020
(73) Patentinhaber: Robert Bosch GmbH, 70442 Stuttgart (DE)
(72) Erfinder: MOTZ, Juergen, 71711 Steinheim An Der Murr (DE); LOHRMANN, Martin Andreas, 70176 Stuttgart (DE); KOLLER, Oliver Dieter, 71384 Weinstadt (DE); BOHNE, Christian, 70435 Stuttgart (DE); MEISSNER, Marco, 70469 Stuttgart (DE)
(86) Internationale Anmeldenummer: PCT/EP2018/084576
(87) Internationale Veröffentlichungsnummer: WO 2019/145087

(56) Entgegenhaltungen:
- WO-A1-2018/077658
- DE-A1-102010 026 772
- DE-A1-102013 203 661
- DE-A1-102014 214 103

## Beschreibung

Die Erfindung betrifft ein Verfahren zum Überwachen der Energieversorgung eines Kraftfahrzeugs mit automatisierter Fahrfunktion. Bei dem Verfahren werden insbesondere sicherheitsrelevante Funktionen des Bordnetzes überwacht.

### Stand der Technik

Das Fahrzeugbordnetz hat die Aufgabe, die elektrischen Verbraucher mit Energie zu versorgen. Fällt die Energieversorgung aufgrund eines Fehlers bzw. Alterung im Bordnetz bzw. in einer Bordnetzkomponente in heutigen Fahrzeugen aus, so entfallen wichtige Funktionen, wie die Servolenkung. Da die Lenkfähigkeit des Fahrzeugs nicht beeinträchtigt, sondern nur schwergängig wird, ist der Ausfall des Bordnetzes in heutigen in Serie befindlichen Fahrzeugen allgemein akzeptiert, da der Fahrer als Rückfallebene zur Verfügung steht. Zur Erhöhung der Verfügbarkeit wurden zweikanalige Bordnetz-Strukturen wie beispielsweise in der WO 2015/135729 A1 vorgeschlagen. Diese werden auch benötigt, um Systeme für den hoch- oder vollautomatischen Fahrbetrieb fehlertolerant zu versorgen.

Um den Ausfall von Komponenten prognostizieren zu können, wurden zuverlässigkeitstechnische Ansätze zur Überwachung von Fahrzeugkomponenten erarbeitet. Dazu werden die Bordnetz-Komponenten während des Betriebs überwacht und deren Schädigung ermittelt. Ein solches Verfahren ist bspw. in der Druckschrift DE 10 2013 203 661 A1 beschrieben.

### Einschub für die Beschreibungseinleitung (anzufügen an Seite 1, Zeile 33 der ursprünglichen Beschreibung):

Aus der im Prioritätszeitraum veröffentlichten WO 2018/077658 A1 ist ein Verfahren zum Überwachen eines Kraftfahrzeugs mit automatisierter Fahrfunktionen bekannt. Hierbei wird zumindest eine Kenngröße des Energiespeichers prädiziert in Abhängigkeit von zumindest einem der Lastprofile. In Abhängigkeit von der prädizierten Kenngröße des Energiespeichers wird die dem Lastprofil zugehörige Betriebsweise und/oder die automatisierte Fahrfunktion freigegeben, gesperrt, verlassen oder beeinflusst. Aus der DE 102014214103 A1 ist eine Vorrichtung zur Versorgung zumindest eines Verbrauchers bekannt. Diese umfasst zumindest ein Niedrigspannungsbordnetz und ein Hochspannungsbordnetz, die über einen Gleichspannungswandler miteinander verbunden sind. Ein erster Kanal ist mit dem Hochspannungsbordnetz verbunden, ein zweiter Kanal mit dem Niedrigspannungsbordnetz. Zumindest ein sicherheitsrelevanter, funktionstechnisch redundanter erster Verbraucher ist mit dem ersten Kanal verbunden, ein weiterer, sicherheitsrelevanter, funktionstechnisch redundanter zweiter Verbraucher mit den zweiten Kanal.

Für den sicheren Halt eines automatisch fahrenden Fahrzeugs wird elektrische Energie benötigt, welche über chemische Speicher bereit gestellt werden kann. Chemische Speicher haben jedoch die Eigenschaft, kontinuierlich zu altern und in der Leistungsfähigkeit nachzulassen. Für einen sicheren Betrieb müssten sie entweder stark überdimensioniert werden oder in kurzen Abständen erneuert werden.

Der Erfindung liegt die Aufgabe zugrunde, die Zuverlässigkeit und zugleich die Verfügbarkeit automatisierter Fahrfunktionen sowie der benötigten Energieversorgung zu erhöhen. Diese Aufgabe wird gelöst durch die Merkmale des unabhängigen Anspruchs.

### Offenbarung der Erfindung

Dadurch, dass eine prädizierte Kenngröße eines Energiespeichers ermittelt wird kann die Verfügbarkeit von automatisierten Fahrfunktionen weiter erhöht werden. Diese Kenngröße des Energiespeichers steht in starker Abhängigkeit von einer Grundlast und/oder einem Abschaltpotenzials eines nicht für eine Betriebsweise zur Überführung des Fahrzeugs in einen sicheren Zustand benötigten Verbrauchers ab. Gerade energieintensive Funktionen bzw. Verbraucher im ordnungsgemäßen Betrieb beeinträchtigen die Freigabe für automatisierte Fahrfunktionen nicht. Denn es kann nun davon ausgegangen werden, dass diese Verbraucher sicher bei Bedarf abgeschaltet werden können, sodass die gesamte elektrische Energie bzw. Leistung für eine entsprechende Betriebsweise zur Überführung des Fahrzeugs in einen sicheren Zustand zur Verfügung steht. Gerade durch die Ermittlung der aktuellen bzw. minimal möglichen elektrischen Grundlast im Rahmen des Abschaltpotenzials können verschiedene unterschiedliche Betriebsweisen definiert werden. Vor der Freigabe und während der automatisierten Fahrfunktionen wird überprüft, ob der Energiespeicher für den Fehlerfall im jeweils anderen unabhängigen Bordnetzkanal (bzw. Versorgung durch einen weiteren Energieverbraucher) zumindest eines oder alle möglichen Betriebsweisen versorgen kann, ohne dass die prädizierte Kenngröße, beispielsweise die Versorgungsspannung im Bordnetz, unzulässige Tief einbricht. Dieses Ergebnis kann dann an die Steuerungssoftware der automatisierten Fahrfunktionen zurückgemeldet und im Fehlerfall gegebenenfalls nur eine reduzierte (bezüglich einer geringeren Belastung bzw. Lastprofils) Betriebsweise gefahren werden. Hierzu könnte beispielsweise auf Ausweichmanöver verzichtet werden bzw. könnte alternativ die Geschwindigkeit der automatisierten Fahrfunktionen zur Erreichung eines sicheren Betriebszustands reduziert werden. Selbst bei leicht gealtertem Energiespeicher kann nun die automatisierte Fahrfunktionen im Prinzip noch erlaubt werden, jedoch kann die Strombelastung durch die Aktoren und Steuergeräte auf das aus Sicht des Energiespeichers zulässige Maß begrenzt werden.

In einer zweckmäßigen Weiterbildung ist dem Lastprofil zumindest ein für das-Lastprofil charakteristischer Parameter zugeordnet, wobei die prädizierte Kenngröße ermittelt wird in Abhängigkeit von dem Parameter. Damit vereinfacht sich die Datenverarbeitung, in dem lediglich einer oder nur wenige Parameter beispielsweise an einen Batteriesensor übertragen werden müssen, in dem die Funktion der Prädiktion der Kenngröße erfolgt. Die entsprechenden Übertragungsprotokolle vereinfachen sich. Auch die Prädiktoren selbst kann vereinfacht werden. Besonders zweckmäßig werden als Parameter zumindest eine Zeitspanne einer Dauer der Betriebsweise und/oder ein Maximalwert des Lastprofils und/oder ein Zeitpunkt eines Auftretens eines Maximalwerts des Lastprofils verwendet. Diese Größen beschreiben hinreichend den zu erwarteten Energiebedarf, den die Prädiktion berücksichtigt. Damit ist ein Kompromiss geschlossen, mit einer geringen Anzahl zu übertragender Parameter und der Genauigkeit des zu erwartenden Lastprofils.

In einer zweckmäßigen Weiterbildung wird zumindest eine weitere prädizierte Kenngröße zumindest eines weiteren Energiespeichers ermittelt unter Berücksichtigung eines weiteren Lastprofils, das abhängt von einem weiteren für die Betriebsweise benötigten Verbraucher, der von dem weiteren Energiespeicher versorgt wird. Damit können alternative Bordnetzzweige hinsichtlich ihrer Funktionsfähigkeit zur Durchführung bestimmter Betriebsweisen bewertet werden. Die Freigabe der automatisierten Fahrfunktionen kann erfolgen, wenn zumindest eine eine Betriebsweise zur Überführung des Fahrzeugs in einen sicheren Zustand sicher durchgeführt werden kann. Dadurch erhöht sich wiederum die Verfügbarkeit der automatisierten Fahrfunktionen.

In einer zweckmäßigen Weiterbildung wird zumindest eine elektronische Lastverteilung zur Ansteuerung der Verbraucher und/oder zu deren Stromerfassung vorgesehen. Gerade bei einer elektronischen Lastverteilung wird sichergestellt, dass eine sichere Abschaltung insbesondere von nicht für die Betriebsweise benötigten Verbrauchern erfolgen kann, wodurch sich weiter die Zuverlässigkeit des Gesamtsystems erhöht. Außerdem sind solche elektronischen Sicherungen standardmäßig in der Lage, beispielsweise den fließenden Laststrom zu erfassen und somit Rückschlüsse zu geben auf die Höhe der Grundlast und/oder das Abschaltpotenzial der jeweiligen Last. Dadurch erhöht sich die Genauigkeit der Prädiktion. Die Verfügbarkeit des Gesamtsystems kann weiter erhöht werden.

In einer zweckmäßigen Weiterbildung erfolgt eine Anregung des Bordnetzes zur Ermittlung des Batteriezustands insbesondere durch eine Aktivierung zumindest eines Verbrauchers und/oder zumindest einer Quelle und/oder einer Last geschaltet durch eine elektronische Sicherung. Dadurch verbessert sich die Qualität der Prädiktion bzw. wird diese überhaupt ermöglicht. Liegt beispielsweise die Erfassung bestimmter Kenngrößen des Energiespeichers, die wiederum in die Prädiktion einfließen können, lange zurück und sind daher nicht mehr repräsentativ, kann durch eine gezielte Anregung des Bordnetzes eine aktuelle Ermittlung bestimmter Kenngrößen erfolgen. Dadurch erhöht sich die Zuverlässigkeit des Gesamtsystems.

Weitere zweckmäßige Weiterbildungen ergeben sich aus weiteren abhängigen Ansprüchen und aus der Beschreibung.

### Kurze Beschreibung der Zeichnungen

Figur 1 zeigt einen Batteriesensor zur Prädiktion einer Kenngröße.
Figur 2 zeigt ein mögliches Bordnetz für ein Fahrzeug zum automatisierten Fahren.
Figur 3 zeigt eine Übersicht über verschiedene Steuergeräte hinsichtlich Vernetzung und Funktionsübersicht.
Figur 4 zeigt den zeitlichen Stromverlauf von Komfort- und sicherheitsrelevanten Verbrauchern und daraus resultierende Ableitung korrespondierender Parameter.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Beispielhaft ist in dem Ausführungsbeispiel als möglicher Energiespeicher eine Batterie bzw. Akkumulator beschrieben. Alternativ können jedoch andere für diese Aufgabenstellung geeignete Energiespeicher beispielsweise auf induktiver oder kapazitiver Basis, Brennstoffzellen, Kondensatoren oder Ähnliches gleichermaßen Verwendung finden.

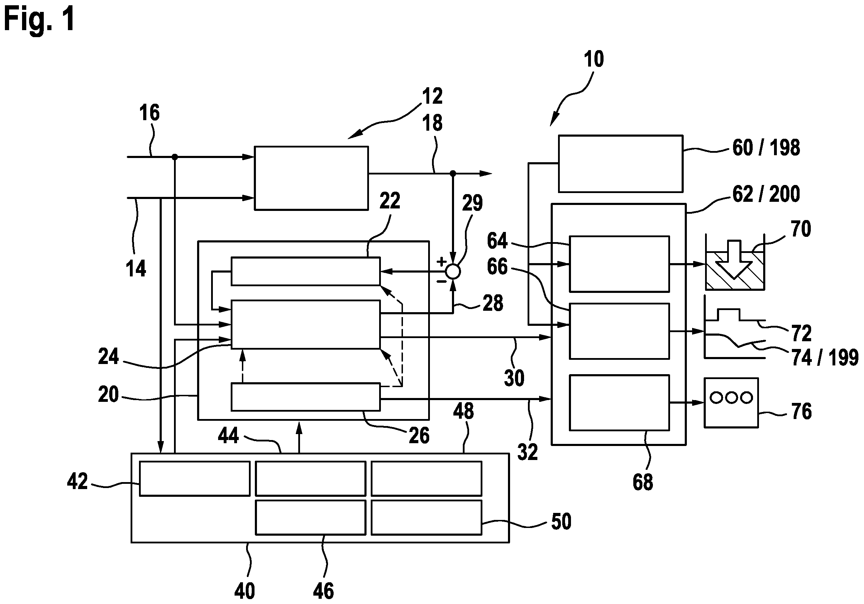

Figur 1 zeigt einen Batteriesensor bzw. Teil eines Batteriemanagement-Systems, der insgesamt mit der Bezugsziffer 10 bezeichnet ist. Eingangsgrößen in eine Einheit 12, insbesondere eine Messeinheit, sind die Temperatur 14 und der Strom 16, Ausgangsgröße ist eine Spannung 18.

In einem Block 20 erfolgt die Abschätzung von Parametern und Zuständen. Hierin sind eine Rückkopplungseinheit 22, ein Batteriemodell 24 und eine Adaption 26 der Parameter vorgesehen. Es werden eine Spannung 28, Batterie-Zustandsvariablen 30 und Batterie-Modellparamater 32 ausgegeben.

Ein Knoten 29 dient dazu, das Batteriemodell 24 an die Batterie anzupassen. Der Strom 16 geht direkt und die Temperatur 14 geht indirekt in das Batteriemodell 24 ein. Dieses berechnet die Variable 28, beispielsweise eine Spannung basierend auf dem Batteriemodell 24, und gleicht diese mit der realen Spannung 18 ab. Bei Abweichungen wird das Batteriemodell 24 über eine Rückkopplungseinheit 22 korrigiert.

Weiterhin ist ein Block 40 für Sub-Algorithmen bereitgestellt. Dieser umfasst ein Batterietemperaturmodell 42, eine Ruhespannungsermittlung 44, eine Spitzenstrommessung 46, eine adaptive Startstromvorhersage 48 und eine Batteriegrö-ßenerfassung 50.

Daneben sind Lastprofile 60, beispielsweise auch in Form von charakteristischen Parametern 198 wie nachfolgend beschrieben, bereitgestellt, die in einen Block 62 mit Prädiktoren eingehen. Diese sind ein Ladungsprädiktor 64, ein Spannungsprädiktor 66 und ein Alterungsprädiktor 68. Ausgaben des Blocks 62 sind ein Signal Q_pred, das verwendet wird, um einen Ladezustand (SOC) 70 zu ermitteln, die prädizierte Spannung U_pred (74,199) in Abhängigkeit vom Laststrom 72 (I) und einen Alterungsprädiktionswert, der dazu benutzt wird den Batterie-Gesundheitszustand (SOH) 76 als mögliche prädizierte Kenngrößen des Energiespeichers zu ermitteln.

Über die Prädiktoren 64, 66, 68 ist der Batteriesensor 10 in der Lage, den SOC 70, den Spannungseinbruch der prädizierte Spannung 74/199 und den SOH 76 während sowie nach mehreren vorher definierten Belastungsszenarien vorherzusagen bzw. zu prädizieren. Diese können jetzt auch auf automatisiertes Fahren bzw. auf den jeweiligen Anwendungsfall angepasst werden. Insbesondere sind die Prädiktoren 64, 66, 68 in der Lage, unter Rückgriff eines typischen Belastungsvorgangs (anhand bestimmter Lastprofile 60, 141 bzw. hierfür charakteristische Parameter 198) einer zugehörigen Betriebsweise (215, SSL 1, SSL 2, SSL 3), ein Fahrzeug zum Stillstand zu bringen, zumindest eine bestimmte Kenngröße der Batterie 106, 110 zu prädizieren (mit Hilfe einer Simulation vorherzusagen). Es können unterschiedliche Betriebsweisen (SSL 1, SSL 2, SSL 3) vorgesehen sein, um das Fahrzeug zum Stillstand zu bringen und damit einen sicheren Betriebszustand des Kraftfahrzeugs (Safe Stop Level) zu erreichen. Jeder dieser unterschiedlichen Betriebsweisen (SSL 1, SSL 2, SSL 3) ist jeweils ein Lastprofil 141 / 198 zugeordnet. Für die jeweiligen Belastung 198 wird der sich daraus ergebende Batteriezustand simuliert und dessen Auswirkungen auf die prädizierte Kenngröße der Batterie 106, 110 (wie beispielsweise Spannnung, Strom, SOC, SOH, SOF (State of Function (SOF) beschreibt die Leistungsfähigkeit der Batterie und gibt Auskunft darüber, mit welcher Leistung der Energiespeicher den Verbraucher versorgen kann)) prädiziert. Führt das Lastprofil 60, 141 in der Simulation zur Unterschreitung bestimmter Grenzwerte durch die Kenngröße (beispielsweise die prädizierte Spannung 74/199), wird die jeweilige mit dem simulierten Lastprofil 141 verknüpfte Betriebsweise SSL gesperrt. Die Lastprofile 60,141 können wie nachfolgend näher erläutert dem Batteriesensor 10 über wenige Parameter 198 übermittelt werden.

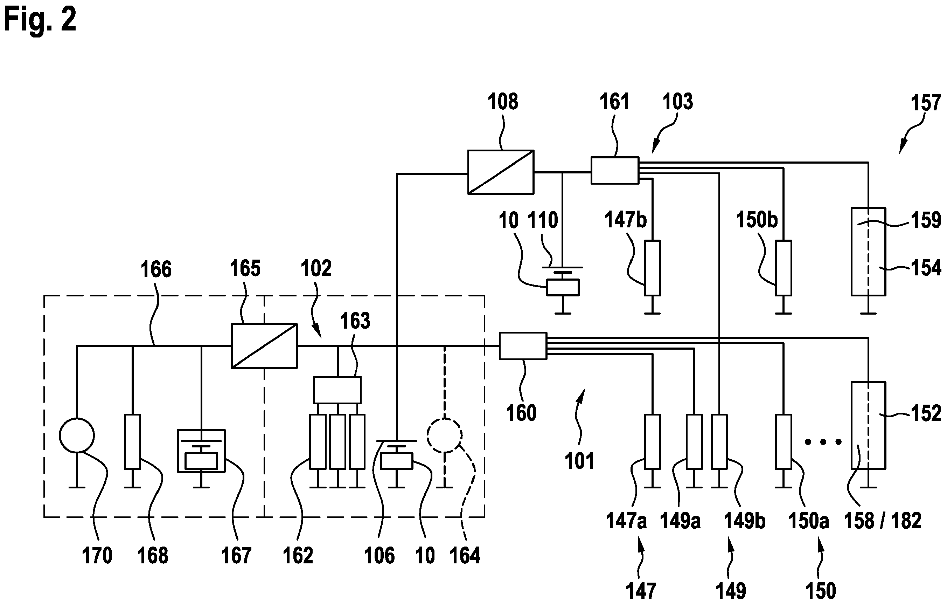

Figur 2 zeigt eine mögliche Topologie eines Energieversorgungssystems, bestehend aus einem Basisbordnetz 102, welches eine Batterie 106 mit zugehörigem Batteriesensor 10, einen Starter 164, mehrere nicht sicherheitsrelevante KomfortVerbraucher 162, die durch eine elektrische Lastverteilung 163 abgesichert bzw. angesteuert werden, umfasst. Das Basisbordnetz 102 weist ein gegenüber einem Hochvolt-Bordnetz 166 niedrigeres Spannungsniveau auf, beispielsweise kann es sich um ein 14 V-Bordnetz handeln. Zwischen dem Basisbordnetz 102 und dem Hochvolt-Bordnetz 166 ist ein Gleichspannungswandler 165 angeordnet. Das Hochvolt-Bordnetz 166 umfasst beispielhaft eine Hochvolt-Batterie 167, eventuell mit integriertem Batteriemanagementsystem, exemplarisch gezeigt eine nicht sicherheitsrelevante Last 168 bzw. Komfortverbraucher wie beispielsweise eine mit erhöhtem Spannungsniveau versorgte Klimaanlage etc. sowie eine Elektromaschine 170. Als Hochvolt wird in diesem Zusammenhang ein Spannungsniveau verstanden, welches höher ist als das Spannungsniveau des Basisbordnetzes 102. So könnte es sich beispielsweise um ein 48-Volt-Bordnetz handeln. Alternativ könnte es sich gerade bei Fahrzeugen mit Elektroantrieb um noch höhere Spannungsniveaus handeln. Alternativ könnte das Hochvolt-Bordnetz 166 ganz entfallen.

Mit dem Basisbordnetz 102 sind zwei sicherheitsrelevante Kanäle 101, 103 verbunden. Der erste sicherheitsrelevante Kanal 101 ist über eine elektronische Lastverteilung 160 mit dem Basisbordnetz 102 verbunden. Die elektronische Lastverteilung 160 dient der Absicherung, Ansteuerung sowie der sicheren und zuverlässigen Abschaltung sicherheitsrelevanter Verbraucher 147a, 149a, 150a, 152, bzw. der elektronischen Energienetzverteilung. Außerdem kann die elektronische Lastverteilung 160 in der Lage sein, die fließenden Verbraucherströme zu erfassen.

Der weitere sicherheitsrelevante Kanal 103 ist sowohl über einen Gleichspannungswandler 108 und über eine weitere elektronische Lastverteilung 161 mit dem Basisbordnetz 102 verbunden. Zwischen Gleichspannungswandler 108 und elektronischer Lastverteilung 161 ist eine weitere Batterie 110 gegen Masse geschaltet angeordnet. Der weiteren Batterie 110 ist auch ein weiterer Batteriesensor 10 zur Erfassung der typischen Kenngrößen der weiteren Batterie 110 angeordnet. Beispielhaft kann es sich bei dem Spannungsniveau der weiteren Batterie 110 um das Spannungsniveau des Basisbordnetzes 102 handeln. Beispielsweise liegt es bei 14 V. Alternative Spannungsniveaus sind denkbar. Die elektronische Lastverteilung 161 im weiteren Kanal 103 dient der Absicherung, Ansteuerung sowie der sicheren und zuverlässigen Abschaltung insbesondere sicherheitsrelevanter Verbraucher 147b, 149b, 150b, 155, 159. Außerdem kann die elektronische Lastverteilung 161 mögliche Verbraucherströme erfassen. Der Gleichspannungswandler 108 lässt einen Energieaustausch zwischen der weiteren Batterie 110 und dem Basisbordnetz 102 sowie gegebenenfalls über den weiteren Gleichspannungswandler 165 mit dem Hochvolt-Bordnetz 166 zu. Damit kann gewährleistet werden, dass die Batterien 106, 110 über die sicherheitsrelevanten Kanäle 101,103 die sicherheitsrelevanten Verbraucher 147, 149, 150, 157 zuverlässig mit Energie versorgen können.

Die über die beiden sicherheitsrelevanten Kanäle 101, 103 versorgbaren redundanten, insbesondere funktionsredundanten, sicherheitsrelevanten Verbraucher 147, 149, 150, 157 sind solche, die notwendig sind, ein Fahrzeug von einem automatisierten Fahrbetrieb (kein Eingreifen des Fahrers notwendig) beispielsweise in kritischen Fehlerfällen in einen sicheren Zustand zu überführen. Wie nachfolgend näher beschrieben kann es sich um ein Anhalten des Fahrzeugs, sei es sofort, sei es am Fahrbahnrand oder erst am nächsten Rastplatz etc. handeln.

Beim Ausführungsbeispiel gemäß Figur 2 sind folgende sicherheitsrelevanten Verbraucher vorgesehen. Hierbei handelt es sich zumindest um ein Bremssystem 147. Die Bremsfunktionalität kann entweder durch eine erste Komponente 147a (beispielsweise ein sogenannter iBooster, der den Bremsdruck elektromechanisch erzeugt), die über den einen sicherheitsrelevanten Kanal 101 versorgt wird, erreicht werden. Die redundante Bremsfunktionalität wird alternativ über eine weitere Komponente 147b erreicht. Beispielhaft kann als weitere Komponente 147b ein sogenanntes elektronisches Stabilitätsprogramm verwendet werden, welches ebenfalls das Fahrzeug zum Stillstand bringen kann. Die weitere Komponente 147b wird über den weiteren sicherheitsrelevanten Kanal 103 versorgt und durch die elektronische Lastverteilung 161 angesteuert.

Als weitere sicherheitsrelevante Komponente ist beispielsweise ein Lenksystem 149 vorgesehen. Das Lenksystem 149 besteht aus einer ersten Komponente 149a, die über die elektronische Lastverteilung 160 durch den ersten sicherheitsrelevanten Kanal 101 angesteuert und versorgt werden kann. Weiterhin umfasst das Lenksystem 149 eine weitere Komponente 149b, die ebenfalls unabhängig von der ersten Komponente 149a das Fahrzeug in gewünschter Weise lenken kann. Die weitere Komponente 149b wird über die weitere elektronische Lastverteilung 161 für den weiteren sicherheitsrelevanten Kanal 103 angesteuert bzw. mit Energie versorgt.

Als weitere mögliche sicherheitsrelevante Komponente ist eine Mensch-Maschine-Schnittstelle 150 (User Interface) vorgesehen. Diese Mensch-Maschine-Schnittstelle 150 besteht wiederum aus zwei unabhängig voneinander betreibbaren Komponenten 150a, 150b. Die eine Komponente 150 a wird über den ersten sicherheitsrelevanten Kanal 101 über die elektronische Lastverteilung 160 angesteuert bzw. mit Energie versorgt. Die weitere Komponente 150b wird von dem weiteren sicherheitsrelevanten Kanal 103 bzw. die zugehörige elektronische Lastverteilung 161 angesteuert bzw. mit Energie versorgt.

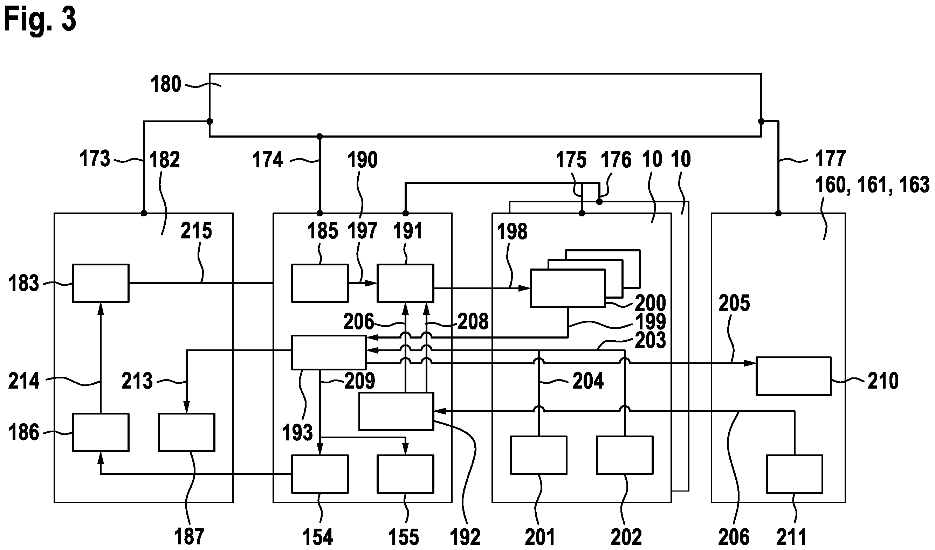

Als weitere sicherheitsrelevante Komponente ist eine automatisierte Fahrfunktion 157 vorgesehen. Alternativ könnten in dem Block 157 jeweils eine Gruppe von Sensoren und ein verarbeitendes Steuergerät, das die Aktoren steuert, vorgesehen sein. Die automatisierte Fahrfunktionen 157 ist wiederum redundant aufgebaut. So werden eine erste Recheneinheit 152 (die erste Recheneinheit 152 könnte der in Figur 3 gezeigten Zentraleinheit 182 entsprechen) sowie eine erste Sensoreinheit 158 von dem ersten Kanal 101 bzw. die zugehörige elektronische Lastverteilung 160 angesteuert bzw. mit Energie versorgt. In redundanter Art und Weise kann die automatisierte Fahrfunktionen 157 durch eine weitere Recheneinheit 154 sowie eine oder mehrere Sensoreinheiten 159 realisiert werden, welche durch den weiteren sicherheitsrelevanten Kanal 103 bzw. zugehörige weitere elektronische Lastverteilung 161 angesteuert bzw. versorgt werden. In den Recheneinheiten 152, 154 erfolgt beispielsweise die Trajektorienplanung mit zugehörigen Ansteuerwerten für die benötigten Aktuatoren. Die Sensoreinheiten 158, 159 stellen jeweils die aktuellen Umfeldinformationen des Fahrzeugs für die Trajektorienplanung zur Verfügung.

In Figur 3 sind die Vernetzung der Steuergeräte und eine Funktionsübersicht gezeigt. Eine Zentraleinheit 182 (die Zentraleinheit 182 könnte der Recheneinheit 158 gemäß Figur 2 entsprechen) für automatisiertes Fahren tauscht über eine Datenverbindung 173 Daten aus mit einem Gateway 180. Bei der Datenverbindung 173 kann es sich beispielsweise um eine Ethernet-Verbindung handeln.

Eine Steuereinheit 190 tauscht über eine weitere Datenverbindung 174 Daten aus mit dem Gateway 180. Bei der weiteren Datenverbindung 174 kann es sich beispielsweise um einen CAN-Bus handeln. In der Steuereinheit 190 sind Steuerungen der Energiebordnetz-Funktionen bzw. des Energiemanagements vorgesehen. Das Energiemanagement überwacht und steuert die Energieverteilung im Bordnetz. Abhängig von Lastzuständen können beispielsweise bei einem drohenden Energieengpass bestimmte mit niedriger Priorität kategorisierte Lasten bzw. Verbraucher abgeschaltet bzw. trotz entsprechender Anforderung nicht aktiviert werden. So sind in dem Energiemanagement beispielsweise die typischen Leistungsanforderungen der jeweiligen Verbraucher bei einer geplanten Aktivierung hinterlegt oder werden ermittelt. Alternativ könnten die Funktionen des Energiemanagements anstelle in der Steuereinheit 190 auch in dem Gleichspannungswandler 108, 165 gemäß Figur 2 oder aber in einem sonstigen Steuergerät (beispielsweise in den Verbrauchern 162) im Fahrzeug realisiert werden. Alternativ wäre es auch möglich, diese Funktionen bezüglich des Energiemanagements des Bordnetzes 102, 166 in der Zentraleinheit 182 oder im Gateway 180 zu implementieren.

Weiterhin sind wie bereits im Zusammenhang mit Figur 1 beschrieben beispielhaft zwei Batteriesensoren 10 vorgesehen. Der eine Batteriesensor 10 tauscht über eine Datenverbindung 175 Daten aus mit der Steuereinheit 190. Der weitere Batteriesensor 10 tauscht über eine weitere Datenverbindung 176 ebenfalls mit der Steuereinheit 190 Daten aus. Bei den Datenverbindungen 175, 176 kann es sich beispielsweise um einen sogenannten LIN-Bus handeln. Die jeweiligen Batteriesensoren 10 sind an den zugehörigen Batterien 106, 110 angeordnet, beispielsweise an deren Polen. Wie bereits bzw. nachfolgend näher beschrieben sind in den Batteriesensoren 10 weitere Funktionen hinterlegt. Beispielhaft gezeigt sind eine Funktion 201 zur Ermittlung eines Innenwiderstands und/oder eine Funktion 202 zur Erkennung einer ordnungsgemäßen Verbindung des Energiespeichers bzw. der Batterie 106, 110 mit dem Bordnetz 102, 166. Außerdem ist in jedem Batteriesensor 10 ein Prädiktor 62, 200 vorgesehen, der wie beschrieben bestimmte Kenngrößen, insbesondere die Spannung, abhängig von bestimmten Lastprofilen 141, gegebenenfalls dargestellt über gewisse Parameter 198, prädiziert. Hierzu erhält der Batteriesensor entsprechende Parameter 60, 198 von der Steuereinheit 190. Bestimmte Daten wie beispielsweise prädizierte Kenngrößen 74, 199 teilt der Batteriesensor 10 wiederum der Steuereinheit 190 mit.

Weiterhin ist zumindest eine elektronische Lastverteilung 160, vorzugsweise sind weitere Lastverteilungen 161, 163 vorgesehen. Die elektronische Lastverteilung 160, 161, 163 kommuniziert über eine weitere Datenverbindung 177 mit dem Gateway 180 bzw. der daran angeschlossenen Steuereinheit 190 bzw. Zentraleinheit 182, 152. Als weitere Datenverbindung 177 könnte beispielsweise ein CAN-Bus vorgesehen sein. Die elektronische Lastverteilung 160, 161, 163 wird beispielsweise vor nicht sicherheitsrelevanten Komfortverbrauchern 162 zu deren Aktivierung/Deaktivierung platziert. Prinzipiell können diese elektronischen Lastverteilungen 160, 161, 163 sicherheitsrelevante Lasten, insbesondere solche, die zur Überführung des Fahrzeugs in einen sicheren Zustand notwendig sind, ansteuern wie bereits in Verbindung mit Figur 2 beschrieben. In der elektronischen Lastverteilung 160 ist systematisch angedeutet eine Funktion 210 zur Abschaltung von Komfortverbrauchern 162 vorgesehen. Außerdem kann in der elektronischen Lastverteilung 160, 161, 163 auf eine Funktion 211 zur Messung einer Grundlast 206 in der elektronischen Lastverteilung 160 implementiert sein.

Prinzipiell sind die Steuergeräte wie Zentraleinheit 182, 152, Steuereinheit 190, Batteriesensoren 10 sowie elektronische Lastverteilungen 160, 161, 163 zum Zwecke des Datenaustauschs miteinander verbunden, wie bereits beschrieben über Ethernet, CAN-Bus oder LIN-Bus. Üblicherweise ist wie in der Figur 3 dargestellt ein Gateway 180 oder ein Steuergerät mit Gateway-Funktion dazwischen geschaltet. Weiterhin sind im Fahrzeug noch weitere Steuergeräte vorhanden, die nicht dargestellt sind. Auf den in Figur 3 gezeigten Steuergeräten sind verschiedene Funktionen partitioniert, dargestellt durch die verschiedenen Blöcke und verbunden durch die gezeigten Signalpfade.

Die Zentraleinheit 182, 152 umfasst in einem Block eine Bewegungssteuerung 186 für das Fahrzeug. In der Bewegungssteuerung 186 werden die geplanten Trajektorien umgewandelt in entsprechende Steuerungsbefehle für die im Fahrzeug befindlichen Aktoren. Beispielsweise werden entsprechende Lenkbefehle in Form von Lenkwinkelvorgaben für das Lenksystem 149 bzw. entsprechende Bremsmanöver dem Bremssystem 147 vorgegeben. In dem Block sind ebenfalls entsprechende Bewegungssteuerungen 186 für die unterschiedlichen Betriebsweisen SSL zum Erreichen eines sicheren Zustandes hinterlegt. Die Bewegungssteuerung 186 setzt entsprechende Trajektorien der unterschiedlichen Betriebsweisen SSL zur Erreichung eines sicheren Zustands in Steuerungsbefehle 214 für die Aktuatoren um und stellt sie einer Funktionseinheit 183 zum Erreichen eines sicheren Betriebszustands zur Verfügung.

In der Zentraleinheit 182, 152 ist beispielsweise die Funktionseinheit 183 zum Erreichen eines sicheren Stopps bzw. sicheren Zustands vorgesehen. In der Funktionseinheit 183 zum Erreichen eines sicheren Stopps ist hinterlegt bzw. bedatet, wie das Fahrzeug im Fehlerfall automatisiert in den sicheren Zustand gebracht werden soll. Beispielsweise ist hinterlegt, dass sofort das Fahrzeug verzögert werden soll in einer ersten Betriebsweise SSL 1. Alternativ könnte hinterlegt sein, dass die Sensoren (beispielsweise in einer der Sensoreinheiten 158, 159) den weiteren Spurverlauf erfassen und das Fahrzeug über die Lenkung 149 diesem Spurverlauf folgen soll und das Fahrzeug in der Spur angehalten werden soll. Weiterhin könnte hinterlegt sein, dass das Fahrzeug bis zum nächsten Rastplatz oder auf dem Standstreifen zum Stehen gebracht werden soll. Es kann weiterhin sein, dass bei der gleichen automatischen Fahrfunktionen abhängig vom Fehlerfall verschiedene Betriebsweisen SSL zur Erreichung eines sicheren Zustands gefahren werden können. Im Ausführungsbeispiel gibt es pro (Bordnetz) Kanal 101, 103 drei verschiedene Betriebsweisen SSL 1, SSL 2, SSL 3, die sich insbesondere im Bedarf von elektrischer Energie, Leistung und Dauer unterscheiden. Den jeweiligen unterschiedlichen Betriebsweisen SSL sind übliche Lastprofile 141 zugeordnet, die beispielsweise den Verlauf des Stroms oder der Leistung eines oder mehrerer Verbraucher bzw. Aktuatoren, die bei der Überführung in den sicheren Zustand in der speziellen Betriebsweise SSL beteiligt sind, widerspiegeln. Hierzu sind unterschiedliche Betriebsweisen SSL in der Funktionseinheit 183 hinterlegt mit unterschiedlichen Leistungsanforderungen, insbesondere mit wenig Leistung (leicht), mit mittlerer Leistungsanforderung (typische Leistungsanforderungen) und hoher Leistungsanforderung (sogenanntes Worst-Case-Manöver).

In einer ersten Betriebsweise SSL 1 zur Erreichung eines sicheren Zustands erfolgt beispielsweise ein langsamer Aufbau des Bremsdrucks für geringe Verzögerung und ein Halten in der Spur. Dieses Szenario braucht aufgrund der kurzen Dauer tmax wenig Energie bzw. wenig elektrische Leistung, da keine dynamischen Fahr-Manöver gefahren werden.

In einer zweiten Betriebsweise SSL 2 kann beispielsweise ein Druckaufbau, eine ABS-Regelung sowie ein Halten in der Spur erfolgen. Die Dauer tmax des Manövers ist ebenfalls recht kurz, aber es wird mehr Energie für die Bremsdruck-Modulation benötigt. Weiterhin treten durch die Druck-Modulation beispielsweise bei einem elektronischen Stabilitätsprogramm 147a Stromspitzen auf, bei denen der Energiespeicher bzw. die Batterie 106, 110 kurzfristig eine hohe Leistung bereitstellen muss.

In einer dritten Betriebsweise SSL 3 wird beispielsweise die Fahrerübergabe im Fehlerfall für eine bestimmte Zeitspanne von beispielsweise 10-15 Sekunden getriggert. Danach erfolgen dynamische Spurwechsel inklusive Eingriffe zur Stabilisierung und zum Verzögern des Fahrzeugs bis zum Stand. Diese Betriebsweise besitzt die höchste Anforderung bezüglich Energie- und Leistungsaufnahme. Durch die dynamischen Fahrmanöver kann es passieren, dass das elektrische Lenksystem 149 und das elektrische Bremssystem 147 gleichzeitig eine hohe elektrische Leistung benötigen. Diese hohe Strombelastung kann zu kritischen Spannungseinbrüchen führen, wodurch sicherheitsrelevante Verbraucher nicht mehr ordnungsgemäß versorgt werden könnten. Generell sind jedoch viele weitere und auch deutlich andere Betriebsweisen zur Überführung des Fahrzeugs in den sicheren Zustand denkbar. Prinzipiell sollen jedoch die unterschiedlichen Betriebsweisen SSL hinsichtlich Energie-und Leistungsbedarf verallgemeinert und geclustert werden.

Die für die Betriebsweisen SSL relevanten Daten 215 der sogenannten Safe-Stopp-Manöver der Funktionseinheit 183 werden an einen Block 185 "Parameter SSL" übertragen. Dieser Block 185 ist bevorzugt in der Steuereinheit 190 angesiedelt. Ein Vorteil dieser Variante ist, dass die Energiemanagement-Funktionen wie in der Steuereinheit 190 angesiedelt den Leistungsbedarf der zu versorgenden Verbraucher deutlich besser kennen als beispielsweise die Zentraleinheit 182 bzw. 152. Die Betriebsweisen SSL zur Überführung des Fahrzeugs in einen sicheren Zustand können sich aufgrund eines Funktionsupdates oder aufgrund geänderter Umgebungsbedingungen ändern. Je Kanal bzw. Bordnetz Zweig 101, 103 sind verschiedene Betriebsweisen SSL wie beschrieben in der Funktionseinheit 183 hinterlegt.

Generell werden nur bestimmte Parameter 197 der Lastprofile 141 der verschiedenen Betriebsweisen SSL je Kanal an das die Steuereinheit 190, insbesondere für das Energiemanagement, übertragen.

In dem Block 185 "Parameter SSL" werden diese bestimmte Parameter 197 ermittelt und/oder hinterlegt, die die Lastprofile 141 bei typischen Betriebsweisen SSL in einfacher Form abbilden. Als Parameter 197 werden besonders bevorzugt der maximale zeitliche Verlauf des Leistungsbedarfs (Dauer der jeweiligen Betriebsweise SSL) tmax und/oder eine maximale Leistung bzw. sonstige Kenngröße (beispielsweise der Strom I) des jeweiligen an der entsprechenden Betriebsweise SSL beteiligten Verbrauchers bzw. Aktuators Pact1, Pact2,... und/oder der Zeitpunkt des Auftretens tact1, tact2, ... dieser maximalen Leistung bzw. sonstigen Kenngröße verwendet. Die so ermittelten Parameter 197 werden dem Speicher 191 der Steuereinheit 190 zur Verfügung gestellt.

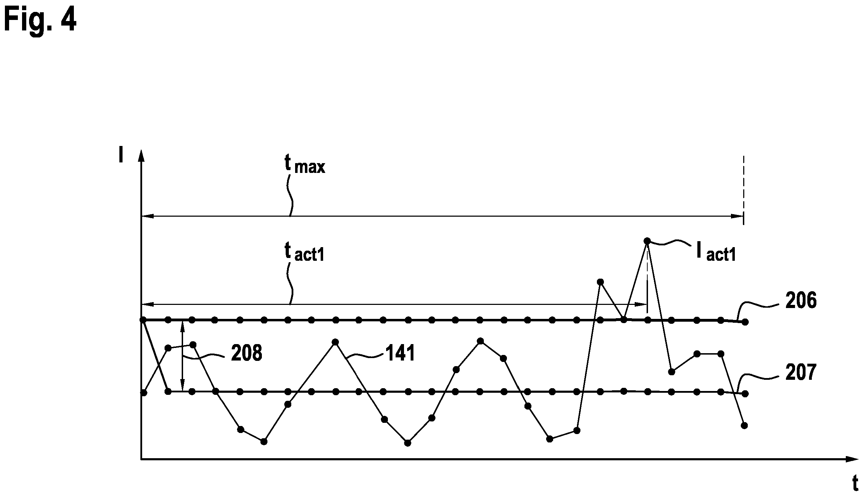

Bei den Parametern 197 handelt es sich also beispielsweise um eine maximale Kenngröße, beispielsweise eine Maximalleistung Leistung Pactl oder ein Spitzenstrom lact1, des Aktuators 1 zum Zeitpunkt tacl. Allgemein für einen Aktuator actn formuliert handelt es sich bei einem der Parameter 197 um eine maximale Kenngröße Pactn, lactn des Aktuators actn zum Zeitpunkt tactn des Auftretens dieser maximalen Kenngröße Pactn, lactn (Maximum des zeitlichen Verlaufs der Kenngröße bzw. des Lastprofils 141 innerhalb der Zeitspanne tmax) für den jeweiligen Kanal Ch1, Ch2, Chn bzw. Bordnetzzweig 101, 103. Außerdem wird in dem Block 185 hinterlegt oder rechnerisch ermittelt, wie lange die jeweilige Betriebsweise SSL je Kanal maximal dauert (tmax). Weiterhin kann in dem Block 185 hinterlegt sein oder rechnerisch ermittelt werden, wie der aktuelle Status der automatischen Fahrfunktionen ist (beispielsweise aktiv/inaktiv/warten auf Freigabe etc.) und/oder ob eine Anfrage bezüglich der Freigabe der automatisierten Fahrfunktionen vorliegt. Auch diese Daten sind als Parameter 197 zu verstehen. Diese Parameter 197 werden komplett oder nur teilweise an die Steuereinheit 190, vorzugsweise das Energiemanagement, übertragen. Der Parameter 197 könnte zudem den Status der automatisierten Fahrfunktionen umfassen. Ebenfalls könnte im Rahmen der Parameter 197 eine Anfrage zur Freigabe der automatisierten Fahrfunktionen übertragen werden, welche die nachfolgenden Überprüfungsprozeduren starten könnte. Einige der Parameter 197 lassen sich auch der nachfolgend kurz erläuterten Figur 4 entnehmen.

Figur 4 zeigt beispielhaft den zeitlichen Stromverlauf 206 von Komfortverbrauchern 162 und sicherheitsrelevanten Verbrauchern 147, 149, 157 sowie einen Stromverlauf als Beispiel für ein typisches Lastprofil 141 eines Aktuators act1 für eine bestimmte Betriebsweise SSL. Eingezeichnet ist die aktuelle Grundlast 206 wie sie vom Energiemanagement ermittelt und gegebenenfalls an den Batteriesensor 10 geliefert wird. Die Grundlast 206 weist beispielhaft einen konstanten Stromwert auf. Weiterhin ist eingezeichnet diejenige reduzierte Grundlast 207, auf die bei Bedarf reduziert werden kann. Die Differenz zwischen der aktuellen Grundlast 206 und der reduzierten Grundlast 207 ist als Abschaltpotenzial 208 eingezeichnet. Das Abschaltpotenzial 208 berücksichtigt, dass solche Verbraucher, die nicht unbedingt für die jeweilige Betriebsart SSL benötigt sind, also in der Regel die Komfortverbraucher 162, abgeschaltet werden können. Bei einem Zeitpunkt tactl erreicht der Aktuator act1 seinen Maximalwert bzw. seine maximale Kenngröße, im Ausführungsbeispiel gemäß Figur 4 den Maximalstrom lact1. Weiterhin eingezeichnet ist die maximale Zeitdauer tmax für die Durchführung der entsprechenden Betriebsweise SSL 1 von dem Start der Betriebsweise SSL zum Zeitpunkt t=0 bis zu deren Beendigung, wenn das Fahrzeug in den sicheren Betriebszustand überführt wurde. Die Größenordnung für die maximale Zeitdauer tmax liegt je nach Manöver in der Größenordnung von einigen Sekunden bis hin zu mehreren Minuten.

In der Steuereinheit 190, vorzugsweise das Energiemanagement, ist wie in Figur 3 gezeigt eine Funktionseinheit 192 zur Ermittlung der Grundlast implementiert. Zur Ermittlung der Grundlast im Bordnetz 102 durch sowohl sicherheitsrelevante wie auch andere (nicht sicherheitsrelevante) Verbraucher 162 bzw. Komfortverbraucher wie Heizung, Klimaanlage oder andere Komfortfunktionen könnten beispielsweise Parameter zur Leistungsaufnahme hinterlegt sein. Alternativ besteht die Möglichkeit, dass die elektronische Lastverteilung 163 den Strom einzelner oder mehrerer Verbraucher 162 in einem Block 211 misst und als Daten 206 (aktuelle Grundlast) der Funktionseinheit 192 zur Ermittlung der Grundlast zur Verfügung stellt. Alternativ könnten entsprechende Leistungsdaten auch in den Verbrauchern selbst erfasst und an die Steuereinheit 190 übermittelt werden. Sowohl die Parameter 197 der verschiedenen Betriebsweisen SSL und/oder die ermittelte Grundlast 206 und/oder das zugehörige Abschaltpotenzial 208 werden in einem Block 191 gespeichert und gegebenenfalls weiterverarbeitet. Weiterhin kann die Steuereinheit 190 ermitteln, wie stark die Grundlast 206 bei Bedarf durch die elektronische Lastverteilung 163 reduziert werden kann (Abschaltpotenzial 208). Hierzu werden beispielsweise gerade aktivierte, jedoch abschaltbare Verbraucher, insbesondere Komfortverbraucher 162 mit den zugehörigen Leistungsaufnahmen ermittelt. Insbesondere bei der Verwendung von elektronischen Lastverteilungen 160, 161, 163 kann zuverlässig davon ausgegangen werden, dass die elektronische Lastverteilung 163 die Grundlast 206 im Fahrzeug um einen bestimmten Betrag (Abschaltpotenzial 208) zuverlässig und sicher reduzieren kann. Wird dann die Betriebsweise SSL zur Überführung in einen sicheren Zustand tatsächlich durchgeführt, so aktiviert die Steuereinheit 190, insbesondere das Energiemanagement, die Abschaltung der Komfortlasten 162 durch entsprechende Befehle an die elektronische Lastverteilung 163 entsprechend dem ermittelten Abschaltpotenzial 208.

Die elektronische Lastverteilung 163 besitzt unter anderem auch die Aufgabe, die Basislasten bzw. Komfortverbraucher 162 mit einem Sicherheitsziel abzuschalten. Über eine entsprechende Strommessung bzw. einen Funktionsblock 211 zur Bestimmung der Grundlast 206 wird diese an die Steuereinheit 190, vorzugsweise das Energiemanagement, mitgeteilt. Bei einer entsprechenden Prädiktion der Kenngröße (beispielsweise die prädizierte Bordnetzspannung U 74 bzw. 199 unter Verwendung der reduzierten Grundlast 207 und des Lastprofils 60, 198) kann davon ausgegangen werden, dass diese Lasten bzw. Verbraucher 162 während der entsprechenden Betriebsweise SSL 1, SSL 2, SSL 3 zur Erreichung eines sicheren Zustands abgeschaltet werden können. Dadurch steigt die Verfügbarkeit der automatisierten Fahrfunktionen.

Aus der aktuellen Grundlast 206 und dem Abschaltpotenzial 208 ermittelt die Steuereinheit 190 diejenige reduzierte Grundlast 207, die maximal während der Dauer tmax der jeweiligen Betriebsweise SSL zur Erreichung eines sicheren Zustands vorliegen wird. Die maximale Dauer tmax der jeweiligen Betriebsweise SSL, die zugehörige reduzierte Grundlast 207 während dieser Zeit und der maximale Strombedarf der für die jeweilige Betriebsweise SSL notwendigen Aktuatoren lact1, lactn zu dem jeweiligen Zeitpunkt tact1, tactn sind in einem Speicherblock 191 hinterlegt und werden an zumindest einen Prädiktor 200 bzw. 62 eines Batteriesensors 10, je nach Bedarf auch an weitere Batteriesensoren 10 bzw. zugehörige Prädiktoren 200 bzw. 62 für die jeweiligen Kanäle 101, 103 übertragen. Bei dem Ausführungsbeispiel gemäß Figur 3 ist der Speicherblock 191 in der Steuereinheit 190 implementiert.

Üblicherweise wird für jeden Kanal 101, 103 (bzw. Ch1, Ch2...) mit den jeweiligen von diesem Kanal 101, 103 gespeisten sicherheitsrelevanten Aktuatoren bzw. Verbrauchern 147a, 149a, 150a, 152, 158; 147b, 149b, 150b, 154, 159 für jede Betriebsweise SSL ein separater Prädiktor 62 bzw. 200.1, 62 bzw. 200.2 angelegt. Parallel können auch mehrere Prädiktoren 62 bzw. 200 vorgesehen werden. Ergebnis eines Prädiktors 62 bzw. 200 ist eine prädizierte Kenngröße, beispielsweise der berechnete minimale Spannungseinbruch (UpredSSL, entsprechende Parameter 199 bzw. 74) an der Batterieklemme, verursacht durch den vorgegebenen Stromverlauf bzw. Lastverlauf 141 der zugehörigen Betriebsweise SSL. Weiterhin wird ein Konfidenzintervall für die prädizierte Kenngröße (UpredSSL, 74/199) ausgegeben. Um die erwartete Kenngröße prädizieren zu können, sind viele weitere Zustandsgrößen der Batterie 106, 110 wie der Ladungszustand SOC, der State-of-Health SOH, der Innenwiderstand Ri (vergleiche Block 201) oder Ähnliches notwendig. Diese werden innerhalb des Batteriesensors 10 berechnet wie beschrieben.

Parallel zur Prädiktion der Kenngröße (beispielsweise der Spannung 74/199 bzw. des Spannungseinbruchs) während der jeweiligen Betriebsweise SSL wird weiterhin der Innenwiderstand Ri als Kenngröße 204 der jeweiligen Batterie 106, 110 berechnet (Block 201) und ebenfalls mit einem zugehörigen Vertrauensintervall ausgegeben. Zusätzlich läuft in einem Funktionsblock 202 eine Batterie-ab-Erkennung ab. Ein in diesem Funktionsblock 202 hinterlegter Algorithmus erkennt, wenn die Verbindung von der Batterie 106, 110 zum Batteriesensor 10 bzw. zum Bordnetz 102 unterbrochen ist.

Jede dieser Größen wird getrennt für jeden Kanal 101, 103 und getrennt für jede Betriebsweise SSL zu einem Analyseblock 193 übertragen. In diesem Analyseblock 193 erfolgt eine Analyse, bei welchen Grenzen der prädizierten Kenngröße (beispielsweise Spannungsgrenzen) ein sicherheitsrelevanter Verbraucher 147, 149, 157 nur noch degradiert (beispielsweise mit geringerer Leistung betrieben) werden kann oder gar nicht mehr funktioniert, d.h. bis zu welchem Wert die prädizierte Kenngröße wie beispielsweise die Spannung im Kanal 101, 103 bzw. an der Eingangsklemme des sicherheitsrelevanten Verbrauchers 147, 149, 157 einbrechen darf, ohne dass sicherheitsrelevante Funktionen ausfallen. Diese Grenzwerte werden mit den prädizierten Kenngrößen verglichen. Wird prädiziert, dass aufgrund des Zustands der zugehörigen Batterie 106, 110 gewisse sicherheitsrelevante Funktionen nicht mehr betrieben werden können, weil gemäß der Prädiktion die Kenngröße (beispielsweise die Spannung) zu tief einbrechen würde, wird die entsprechende Statusinformation (Statusbit Status BN1) für die jeweilige Betriebsweise SSL auf 0 (jeweilige SSL nicht zulässig) gesetzt. In diesem Fall wird die automatische Fahrfunktion nur noch eingeschränkt freigegeben. Wenn jedoch sämtliche Betriebsweisen SSL zur Erreichung eines sicheren Zustands nicht mehr durch die Batterie 106, 110 versorgt werden können (sämtliche Zustände Status BN1 (oder BN2) für sämtliche Betriebsweisen SSL nicht zulässig), ohne dass die prädizierte Kenngröße unzulässig einbricht, wird die komplette automatische Fahrfunktion durch einen Funktionsblock 187 betreffend der Freigabe komplett gesperrt. Die entsprechende Statusinformation des Analyseblocks 193, die dort generiert wurde, wird entsprechend an die Zentraleinheit 182 bzw. 152 bzw. den Funktionsblock 187 der Zentraleinheit 182 bzw. 152 weitergegeben. Entsprechendes gilt für die Statusinformationen 213 (Status BN 1, Status BN 2 für die jeweiligen Betriebsweisen SSL l....n) für die jeweiligen einzelnen Betriebsweisen SSL, ob diese anhand der prädizierten Kenngrößen zulässig sind.

Weiterhin kann der im Analyseblock 193 realisierte Prüfdurchlauf auch durchgeführt werden, wenn die automatische Fahrfunktion bereits im Betrieb ist. In diesem Fall könnten dem Analyseblock 193 etwas schärfere (d.h. höhere) Grenzwerte wie beispielsweise Spannungsgrenzen hinterlegt sein, um zu vermeiden, dass die automatische Fahrfunktionen freigegeben wird, obwohl die Batterie 106, 110 nahe an der zulässigen Leistungsgrenze ist. Der Analyseblock 193 ist beispielsweise in der Steuereinheit 190 implementiert.

Weiterhin ist es möglich, dass in einem Kanal 101, 103 für längere Zeit kein Verbraucher 147, 149, 150, 157, 162 aktiv war und somit die Batterie 106, 110 keine Belastung durch Stromabgabe oder Stromaufnahme bekommen hat. In diesem Fall wird die Gültigkeit des Ergebnisses durch den jeweiligen Prädiktor 200 bzw. 62 zurückgesetzt (bspw. Gültigkeit = 0), da die Batterie 106, 110 für eine gewisse Zeit nicht mehr diagnostiziert werden konnte. Somit wird aktiv der Zeitpunkt der letzten Batteriediagnose erfasst und gegebenenfalls zur Erkennung der Gültigkeit wie beschrieben ausgewertet. Eine elektrische Anregung kann erzeugt werden, indem Verbraucher 147, 149, 150, 157, 162 über die Steuereinheit 190 (Energiemanagement) und über eine elektronische Lastverteilung 160, 161, 163 zugeschaltet werden. Dies erfolgt durch den Block 194, der der Anregung (der Batterie 106, 110 bzw. des Bordnetzes 102) beispielsweise durch Verbraucher dient. Alternativ könnte eine Quelle (beispielsweise ein Gleichspannungswandler 108, 165 gemäß Figur 2) mehr Energie in den jeweiligen Kanal 101, 103 des Bordnetzes 102 speisen oder dem Kanal 101, 103 entnehmen. Diese Funktionalität erfolgt durch einen Block 195, der der Anregung durch eine Quelle dient. Die beiden Blöcke 194, 195 sind beispielhaft in der Steuereinheit 190 implementiert. Neben dem Gleichspannungswandler 108, 165 könnte bei fehlender Gültigkeit eine Anregung auch über einen Generator oder weitere Aktorik erfolgen.

In einer alternativen Ausgestaltung, die nicht gezeigt ist, wurde der Block 185 zur Hinterlegung der Parameter der unterschiedlichen Betriebsweisen SSL von der Steuereinheit 190 (Energiemanagement) in die Zentraleinheit 182 bzw. 152 partitioniert. Dies bedeutet, dass die zugehörigen Betriebsweisen SSL in der Zentraleinheit 82 bzw. 152 generiert werden und zusätzlich die Umrechnung in elektrische Betriebsgrößen ebenfalls in der Zentraleinheit 182 bzw. 152 erfolgt.

In einer alternativen Ausführungsform werden nicht nur Spannungseinbrüche (prädizierte Kenngrößen unterschreiten bestimmte Grenzwerte), sondern auch ein Überschreiten von Grenzwerten prädiziert (beispielsweise Überspannungen), die bei Rückspeisung in eine pufferunfähigen Batterie 106, 110 auftreten können.

Besonders bevorzugt ist die Steuereinheit 190 eingerichtet, zumindest eine Grundlast 206 und/oder einem Abschaltpotenzial 208 des nicht für die Betriebsweise SSL benötigten Verbrauchers 162 zu ermitteln, wobei die Steuereinheit 190 eingerichtet ist, die prädizierte Kenngröße zu empfangen, wobei die Steuereinheit 190 eingerichtet ist, in Abhängigkeit von der prädizierten Kenngröße eine Freigabeinformation für die jeweilige Betriebsart SSL zu ermitteln.

Zusammenfassend laufen folgende Schritte ab. Die unterschiedlichen Betriebsweisen SSL zur Erreichung eines sicheren Zustands sind für jeden Kanal bzw. Bordnetzzweig 101, 103 mit entsprechenden Aktuator an Steuerungen und zugehörigen Lastprofilen 141 festgelegt, Block 183.

Die unter anderem aus den Lastprofilen 141 der unterschiedlichen Betriebsweisen SSLChl(l...n); SSLCh2(l...n) für die jeweiligen Bordnetzzweige 101, 103 (Ch1, Ch2) abgeleiteten Parameter 197, 60 sind in dem Block 185 abgelegt bzw. werden an die Steuereinheit 190 übertragen. Alternativ könnten sie in dem Block 185 bzw. der Steuereinheit 190 gebildet werden. Die Parameter 197, 60 werden an den Block 191 des Energiemanagements bzw. der Steuereinheit 190 übertragen. In dem Block 191 des Energiemanagements werden die Parameter 197 hinterlegt. Diese Parameter und gegebenenfalls weitere werden regelmäßig an den bzw. die Batteriesensor(en) 10 übertragen in Form der Parameter 198. Außerdem ermittelt das Energiemanagement bzw. Steuereinheit 190 die tatsächliche Grundlast 206 und/oder das Abschaltpotenzial 208 für jeden Kanal Ch1, Ch2 bzw. Bordnetzzweig 101, 103 und überträgt dies ebenfalls an den bzw. die Batteriesensor(en) 10. Diese Signale entsprechen somit dem Lastprofil 60 bzw. 198.

Der jeweilige Batteriesensor 10 prädiziert auf Basis aktueller Batteriezustandsgrößen die entsprechenden Spannungsverläufe 74, 199 für jede der Betriebsweisen SSL des jeweiligen Kanals bzw. Bordnetzzweigs 101, 103. Der Batteriesensor 10 gibt den prädizierten Spannungseinbruch bzw. die prädizierte Kenngröße (als Teil der vom Batteriesensor 10 ermittelten Parameter 199) am Energiespeicher 106, 110 bzw. der Batterie aus. Weiterhin wird das Konfidenzintervall je Prädiktor 62, 200 ausgegeben. Ein Konfidenzintervall (auch Vertrauensbereich genannt) ist ein Intervall aus dem Gebiet der Statistik, dass die Präzision der Lageschätzung eines Parameters angeben soll. In Abhängigkeit von der Vorgeschichte des Energiespeichers 106, 110 des aktuellen Zustands bzw. der vorhandenen oder vorhergehenden Anregung sind die Ergebnisse der Prädiktoren 62, 200 unschärfer oder präziser. Weiterhin wird eine Angabe zur Gültigkeit des Ergebnisses gemacht. So kann die Gültigkeit des Ergebnisses ablaufen, wenn eine Bordnetzanregung zu lange zurückliegt und eine erneute Anregung des Bordnetzes 102 erforderlich ist, beispielsweise durch Lasten oder durch Quellen. Die weiteren Funktionen wie die Batterie-ab-Erkennung in Block 202 und/oder die Ermittlung des Innenwiderstands in Block 201 laufen parallel im Batteriesensor 10 ab und können in das Diagnoseergebnis mit einfließen.

Die elektronische Lastverteilung 160, 161, 163 hat die Aufgabe einer Abschaltung der Basislast bzw. der Komfortverbraucher 162 mit einem gewissen Sicherheitsziel. Außerdem ist die elektronische Lastverteilung 160, 161, 163 in der Lage, eine Strommessung der Verbraucherströme vorzunehmen und dem Energiemanagement mitzuteilen. Bei der Spannungsprädiktion bzw. Prädiktion der entsprechenden Kenngröße kann davon ausgegangen werden, dass nicht zwingend benötigte Verbraucher 162 während der Durchführung einer entsprechenden Betriebsweise SSL zur Überführung des Fahrzeugs in einen sicheren Zustand abgeschaltet werden können, weshalb die Verfügbarkeit steigt.

Beim Energiemanagement bzw. der Steuereinheit 190 erfolgt eine Umrechnung der vom Batteriesensor 10 prädizierten Kenngröße (Spannungswert U, 199,74) in einen Status BN1, BN2 des jeweiligen Bordnetzzweigs 101, 103 bzw. Kanals Ch1, Ch2 abhängig von der gewählten Betriebsweise SSL. Hierzu vergleicht die Steuereinheit 190 die prädizierte Kenngröße (U, 74,199) mit geeigneten Spannungsschwellen. Liegt die prädizierte Kenngröße (U, 74,199) innerhalb zulässiger Grenzen, generiert die Steuereinheit 190 die Freigabe der automatisierten Fahrfunktionen. Weiterhin sind unterschiedliche Spannungsschwellen für die Freigabe und im Betriebsfall möglich. Abhängig von den Statusangaben BN1, BN2 des Bordnetzes des bzw. Bordnetzzweigs 101, 103 kann die Freigabe der automatisierten Fahrfunktionen erfolgen bzw. die Übergabe an den Fahrer bzw. eine Betriebsweise SSL zur Überführung des Fahrzeugs in einen sicheren Zustand getriggert werden.

## Patentansprüche

1. Verfahren zum Überwachen der Energieversorgung eines Kraftfahrzeugs mit automatisierter Fahrfunktion, mit unterschiedlichen Betriebsweisen (SSL) zur Überführung des Kraftfahrzeug in einen sicheren Zustand, insbesondere in den Stillstand, wobei zumindest ein Energiespeicher (106, 110) zumindest einen nicht für die Betriebsweise (SSL) benötigten Verbraucher (162) und zumindest einen für die Betriebsweise (SSL) benötigten Verbraucher versorgt (147, 149, 150, 157), wobei der jeweiligen Betriebsweise (SSL) jeweils zumindest ein von dem für die Betriebsweise (SSL) benötigten Verbraucher (147, 149, 150, 157) abhängiges Lastprofil (141) zugeordnet ist, das bei dieser Betriebsweise (SSL) üblicher Weise auftritt, wobei in Abhängigkeit von dem Lastprofil (141) zumindest eine Kenngröße (U, 74, 199) des Energiespeichers (106, 110) prädiziert wird und in Abhängigkeit von der prädizierten Kenngröße des Energiespeichers (106, 110) die zugehörige Betriebsweise (SSL) und/oder die automatisierte Fahrfunktion freigegeben wird, **dadurch gekennzeichnet, dass** die prädizierte Kenngröße (74, 199, U) ermittelt wird in Abhängigkeit von einer Grundlast (206) und/oder einem Abschaltpotenzial (208) des nicht für die Betriebsweise (SSL) benötigten Verbrauchers (162).

2. Verfahren nach einem der vorhergehenden Ansprüche, **dadurch gekennzeichnet, dass** dem Lastprofil (141) zumindest ein für das Lastprofil (141) charakteristischer Parameter (197, 198) zugeordnet wird, und dass die prädizierte Kenngröße (74, 199, U) ermittelt wird in Abhängigkeit von dem Parameter (197, 198).

3. Verfahren nach einem der vorhergehenden Ansprüche, **dadurch gekennzeichnet, dass** für die unterschiedlichen Betriebsweisen (SSL) zugehörige Parameter (197,198) ermittelt und/oder abgespeichert werden, die zur Ermittlung der prädizierte Kenngröße (74, 199, U) verwendet werden.

4. Verfahren nach einem der vorhergehenden Ansprüche, **dadurch gekennzeichnet, dass** als Parameter (197, 198) zumindest eine Zeitspanne (tmax) einer Dauer der Betriebsweise (SSL) und/oder ein Maximalwert (lact, Pact) des Lastprofils (141) und/oder ein Zeitpunkt eines Auftretens (tact1) eines Maximalwerts des Lastprofils (141) verwendet wird.

5. Verfahren nach einem der vorhergehenden Ansprüche, **dadurch gekennzeichnet, dass** eine Anregung des Bordnetzes (102) zur Ermittlung der Grundlast (206) und/oder des Abschaltpotenzials (208), insbesondere durch Aktivierung zumindest eines Verbrauchers und/oder zumindest einer Quelle, erfolgt.

6. Verfahren nach einem der vorhergehenden Ansprüche, **dadurch gekennzeichnet, dass** zur Ermittlung der Grundlast (206) und/oder des Abschaltpotentials (208) bestimmte Werte bei einer entsprechenden Aktivierung des jeweiligen Verbrauchers (162) hinterlegt sind und/oder ermittelt werden.

7. Verfahren nach einem der vorhergehenden Ansprüche, **dadurch gekennzeichnet, dass** zumindest eine weitere prädizierte Kenngröße (U) zumindest eines weiteren Energiespeichers (106, 110) ermittelt wird unter Berücksichtigung eines weiteren Lastprofils (141), das abhängt von einem weiteren für eine weitere Betriebsweise (SSL) benötigten Verbraucher (147, 150, 157), der von einem weiteren Energiespeicher (106, 110) bzw. Bordnetzzweig (101, 103) versorgt wird.

8. Verfahren nach einem der vorhergehenden Ansprüche, **dadurch gekennzeichnet, dass** unterschiedliche sicherheitsrelevante Verbraucher (147,100 49,100 50,157) von unterschiedlichen Bordnetzzweigen (101, 103), die von unterschiedlichen Energiespeichern gespeist werden können, versorgt werden, wobei für jeden Bordnetzzweig (101,103) jeweils zumindest zwei unterschiedliche Betriebsweisen (SSL) vorgesehen sind, wobei für die unterschiedlichen Betriebsweisen (SSL) jeweils Kenngrößen (U, 72,199) prädiziert werden und abhängig von den prädizierte Kenngrößen zugehörige Betriebsweisen (SSL) freigegeben werden, wobei zumindest für jeden Bordnetzzweig (101,103) die Grundlast (206) und/oder das Abschaltootenzial (208) ermittelt wird und in der Prädiktion der jeweiligen Kenngrößen (U, 72,199) berücksichtigt wird.

9. Verfahren nach einem der vorhergehenden Ansprüche, **dadurch gekennzeichnet**, eine Gültigkeit der prädizierten Kenngröße (U) ermittelt wird abhängig davon, ob der zugehörige Energiespeicher (106, 110) sich in einem gewünschten Betriebszustand befand und/oder ob eine Anregung des Energiespeichers (106,110) erfolgen soll.

10. Verfahren nach einem der vorhergehenden Ansprüche, **dadurch gekennzeichnet, dass** in Abhängigkeit von der prädizierten Kenngröße (U, 74,199) zumindest eine Freigabeinformation (213) erzeugt wird zur Freigabe der jeweiligen Betriebsweise (SSL) bzw. eines zugehörigen Bordnetzzweigs (101,103).

11. Verfahren nach einem der vorhergehenden Ansprüche, **dadurch gekennzeichnet, dass** die prädizierte Kenngröße (U) und/oder zumindest ein Konfidenzintervall und/oder zumindest eine Gültigkeit auswertet wird und abhängig davon eine Abschaltung zumindest eines nicht für die Betriebsweise (SSL) benötigten Verbrauchers (162) bewirkt wird.

12. Verfahren nach einem der vorhergehenden Ansprüche, **dadurch gekennzeichnet, dass** abhängig von dem ermittelten Konfidenzintervall und/oder der Gültigkeit eine Anregung des Bordnetzes (102) erfolgt, insbesondere durch Aktivierung zumindest eines Verbrauchers (147, 149, 162) und/oder zumindest einer Quelle.

13. Verfahren nach einem der vorhergehenden Ansprüche, **dadurch gekennzeichnet, dass** zumindest eine elektronische Lastverteilung (160, 161, 163) zur Ansteuerung der Verbraucher (147, 149, 162) und/oder zu deren Stromerfassung vorgesehen wird.

14. Verfahren nach einem der vorhergehenden Ansprüche, **dadurch gekennzeichnet, dass** die Grundlast (206) des Bordnetzes (102) zumindest teilweise durch eine elektronische Lastverteilung (160, 161, 163) ermittelt wird, insbesondere durch Messung eines durch einen angesteuerten Verbraucher (162) fließenden Stroms.

15. Verfahren nach einem der vorhergehenden Ansprüche, **dadurch gekennzeichnet, dass** zumindest der für ein Lastprofil (141) charakteristische Parameter (197) abgespeichert wird und/oder an einen Batteriesensor (10) übertragen wird, wobei der Batteriesensor (10) in Abhängigkeit von zumindest einem Parameter (197, 198) die prädizierte Kenngröße (U, 72, 199) ermittelt.

## Claims

1. Method for monitoring the energy supply of a motor vehicle with an automated driving function, having different operating modes (SSL) for putting the motor vehicle into a safe state, in particular into a standstill, wherein at least one energy storage unit (106, 110) supplies at least one consumer (162) not required for the operating mode (SSL) and at least one consumer (147, 149, 150, 157) required for the operating mode (SSL), wherein the respective operating mode (SSL) is assigned in each case at least one load profile (141) dependent on the consumer (147, 149, 150, 157) required for the operating mode (SSL), which load profile normally occurs in this operating mode (SSL), wherein at least one characteristic variable (U, 74, 199) of the energy storage unit (106, 110) is predicted on the basis of the load profile (141) and the associated operating mode (SSL) and/or the automated driving function is enabled on the basis of the predicted characteristic variable of the energy storage unit (106, 110), **characterized in that** the predicted characteristic variable (74, 199, U) is determined on the basis of a main load (206) and/or a deactivation potential (208) of the consumer (162) not required for the operating mode (SSL).

2. Method according to one of the preceding claims, **characterized in that** the load profile (141) is assigned at least one parameter (197, 198) characteristic of the load profile (141), and **in that** the predicted characteristic variable (74, 199, U) is determined on the basis of the parameter (197, 198).

3. Method according to either of the preceding claims, **characterized in that** associated parameters (197, 198) are determined and/or stored for the different operating modes (SSL) and are used to determine the predicted characteristic variable (74, 199, U).

4. Method according to one of the preceding claims, **characterized in that** at least one time interval (tmax) of a duration of the operating mode (SSL) and/or a maximum value (Iact, Pact) of the load profile (141) and/or a time of occurrence (tact1) of a maximum value of the load profile (141) is used as parameter (197, 198).

5. Method according to one of the preceding claims, **characterized in that** the on-board power system (102) is excited in order to determine the main load (206) and/or the deactivation potential (208), in particular by activating at least one consumer and/or at least one source.

6. Method according to one of the preceding claims, **characterized in that**, in order to determine the main load (206) and/or the deactivation potential (208), particular values are stored and/or are determined upon corresponding activation of the respective consumer (162).

7. Method according to one of the preceding claims, **characterized in that** at least one further predicted characteristic variable (U) of at least one further energy storage unit (106, 110) is determined taking into consideration a further load profile (141) that depends on a further consumer (147, 150, 157) that is required for a further operating mode (SSL) and that is supplied by a further energy storage unit (106, 110) or on-board power system branch (101, 103).

8. Method according to one of the preceding claims, **characterized in that** different safety-relevant consumers (147, 100 49, 100 50, 157) are supplied by different on-board power system branches (101, 103) that are able to be fed by different energy storage units, wherein in each case at least two different operating modes (SSL) are provided for each on-board power system branch (101, 103), wherein respective characteristic variables (U, 72, 199) are predicted for the different operating modes (SSL) and associated operating modes (SSL) are enabled depending on the predicted characteristic variables, wherein the main load (206) and/or the deactivation potential (208) is determined at least for each on-board power system branch (101, 103) and is taken into consideration in the prediction of the respective characteristic variables (U, 72, 199).

9. Method according to one of the preceding claims, **characterized in that** a validity of the predicted characteristic variable (U) is determined depending on whether the associated energy storage unit (106, 110) was in a desired operating state and/or whether the energy storage unit (106, 110) is intended to be excited.

10. Method according to one of the preceding claims, **characterized in that** at least one item of enable information (213) is generated on the basis of the predicted characteristic variable (U, 74, 199) so as to enable the respective operating mode (SSL) or an associated on-board power system branch (101, 103).

11. Method according to one of the preceding claims, **characterized in that** the predicted characteristic variable (U) and/or at least one confidence interval and/or at least one validity is evaluated and at least one consumer (162) not required for the operating mode (SSL) is deactivated on the basis thereof.

12. Method according to one of the preceding claims, **characterized in that** the on-board power system (102) is excited depending on the determined confidence interval and/or the validity, in particular by activating at least one consumer (147, 149, 162) and/or at least one source.

13. Method according to one of the preceding claims, **characterized in that** at least one electronic load distribution system (160, 161, 163) is provided for actuating the consumers (147, 149, 162) and/or their acquisition of current.

14. Method according to one of the preceding claims, **characterized in that** the main load (206) of the on-board power system (102) is determined at least partially by an electronic load distribution system (160, 161, 163), in particular by measuring a current flowing through an actuated consumer (162).

15. Method according to one of the preceding claims, **characterized in that** at least the parameter (197) characteristic of a load profile (141) is stored and/or is transmitted to a battery sensor (10), wherein the battery sensor (10) determines the predicted characteristic variable (U, 72, 199) on the basis of at least one parameter (197, 198).

## Revendications

1. Procédé de surveillance de l'alimentation en énergie d'un véhicule automobile muni d'une fonction de conduite automatisée, comprenant différents modes de fonctionnement (SSL) pour faire passer le véhicule automobile à un état sûr, en particulier à l'arrêt, au moins un accumulateur d'énergie (106, 110) alimentant au moins un consommateur (162) non nécessaire au mode de fonctionnement (SSL) et au moins un consommateur (147, 149, 150, 157) nécessaire au mode de fonctionnement (SSL), le mode de fonctionnement (SSL) respectif étant respectivement associé à au moins un profil de charge (141) dépendant du consommateur (147, 149, 150, 157) nécessaire au mode de fonctionnement (SSL) et qui se présente habituellement dans ce mode de fonctionnement (SSL), dans lequel au moins une grandeur caractéristique (U, 74, 199) de l'accumulateur d'énergie (106, 110) est prédite en fonction du profil de charge (141), et le mode de fonctionnement (SSL) associé et/ou la fonction de conduite automatisée sont libérés en fonction de la grandeur caractéristique de l'accumulateur d'énergie (106, 110),
**caractérisé en ce que** la grandeur caractéristique prédite (74, 199, U) est déterminée en fonction d'une charge de base (206) et/ou d'un potentiel de coupure (208) du consommateur (162) non nécessaire au mode de fonctionnement (SSL).

2. Procédé selon l'une quelconque des revendications précédentes, **caractérisé en ce que** le profil de charge (141) est associé à au moins un paramètre (197, 198) caractéristique du profil de charge (141), et **en ce que** la grandeur caractéristique prédite (74, 199, U) est déterminée en fonction du paramètre (197, 198).

3. Procédé selon l'une quelconque des revendications précédentes, **caractérisé en ce que** pour les différents modes de fonctionnement (SSL), des paramètres associés (197, 198) sont déterminés et/ou enregistrés qui sont utilisés pour déterminer la grandeur caractéristique prédite (74, 199, U).

4. Procédé selon l'une quelconque des revendications précédentes, **caractérisé en ce que** comme paramètre (197, 198), au moins un laps de temps (tmax) d'une durée du mode de fonctionnement (SSL) et/ou une valeur maximale (Iact, Pact) du profil de charge (141) et/ou un temps d'une apparition (tact1) d'une valeur maximale du profil de charge (141) sont utilisés.

5. Procédé selon l'une quelconque des revendications précédentes, **caractérisé en ce qu'**une excitation du réseau de bord (102) de déterminer la charge de base (206) et/ou le potentiel de coupure (208), est effectuée, en particulier par l'activation d'au moins un consommateur et/ou d'au moins une source.

6. Procédé selon l'une quelconque des revendications précédentes, **caractérisé en ce que** pour la détermination de la charge de base (206) et/ou du potentiel de coupure (208), certaines valeurs sont enregistrées et/ou déterminées lors d'une activation correspondante du consommateur (162) respectif.

7. Procédé selon l'une quelconque des revendications précédentes, **caractérisé en ce qu'**au moins une autre grandeur caractéristique prédite (U) d'au moins un autre accumulateur d'énergie (106, 110) est déterminée en tenant compte d'un autre profil de charge (141) qui dépend d'un autre consommateur (147, 150, 157) nécessaire à un autre mode de fonctionnement (SSL) et qui est alimenté par un autre accumulateur d'énergie (106, 110) ou une branche de réseau de bord (101, 103).

8. Procédé selon l'une quelconque des revendications précédentes, **caractérisé en ce que** différents consommateurs (147, 100 49, 100 50, 157) de sécurité sont alimentés par différentes branches de réseau de bord (101, 103) qui peuvent être chargées par différents accumulateurs d'énergie, dans lequel, pour chaque branche de réseau de bord (101, 103), respectivement au moins deux modes de fonctionnement différents (SSL) sont prévus, dans lequel, pour les différents modes de fonctionnement (SSL), respectivement des grandeurs caractéristiques (U, 72, 199) sont prédites et des modes de fonctionnement (SSL) associés sont libérés en fonction des grandeurs caractéristiques prédites, dans lequel, au moins pour chaque branche de réseau de bord (101, 103), la charge de base (206) et/ou le potentiel de coupure (208) sont déterminés et pris en compte dans la prédiction des grandeurs caractéristiques (U, 72, 199) respectives.

9. Procédé selon l'une quelconque des revendications précédentes, **caractérisé en ce qu'**une validité de la grandeur caractéristique prédite (U) est déterminée en fonction du fait que l'accumulateur d'énergie (106, 110) associé se trouvait dans un état de fonctionnement souhaité et/ou qu'une excitation de l'accumulateur d'énergie (106, 110) doit être effectuée.

10. Procédé selon l'une quelconque des revendications précédentes, **caractérisé en ce qu'**en fonction de la grandeur caractéristique prédite (U, 74, 199), au moins une information de libération (213) est produite pour libérer le mode de fonctionnement (SSL) respectif ou une branche de réseau de bord associée (101, 103).

11. Procédé selon l'une quelconque des revendications précédentes, **caractérisé en ce que** la grandeur caractéristique prédite (U) et/ou au moins un intervalle de confidence et/ou au moins une validité sont évalués, et une coupure au moins d'un consommateur (162) non nécessaire au mode de fonctionnement (SSL) est provoquée en fonction de ces éléments.

12. Procédé selon l'une quelconque des revendications précédentes, **caractérisé en ce qu'**en fonction de l'intervalle de confidence déterminé et/ou de la validité, une excitation du réseau de bord (102) est effectuée, en particulier par l'activation d'au moins un consommateur (147, 149, 162) et/ou d'au moins une source.

13. Procédé selon l'une quelconque des revendications précédentes, **caractérisé en ce qu'**au moins une répartition de charge électronique (160, 161, 163) est prévue pour piloter les consommateurs (147, 149, 162) et/ou pour détecter leur courant.

14. Procédé selon l'une quelconque des revendications précédentes, **caractérisé en ce que** la charge de base (206) du réseau de bord (102) est déterminée au moins en partie par une répartition de charge électronique (160, 161, 163), en particulier par une mesure d'un courant passant par un consommateur piloté (162).

15. Procédé selon l'une quelconque des revendications précédentes, **caractérisé en ce qu'**au moins le paramètre (197) caractéristique d'un profil de charge (141) est enregistré et/ou transmis à un capteur de batterie (10), le capteur de batterie (10) déterminant en fonction d'au moins un paramètre (197, 198) la grandeur caractéristique prédite (U, 72, 199).
